# EUROPEAN PATENT SPECIFICATION

(11) **EP 3 719 861 B1**
(45) Date of publication and mention of the grant of the patent: **06.07.2022**
(21) Application number: 18882445.2
(22) Date of filing: 05.02.2018
(51) Int. Cl.: B60K 1/04, H01M 50/20, H01M 50/244, H01M 50/249, H01M 50/262

(54) **BATTERY FIXING DEVICE AND VEHICLE**
BATTERIEBEFESTIGUNGSVORRICHTUNG UND FAHRZEUG
DISPOSITIF DE FIXATION DE BATTERIE ET VÉHICULE

(30) Priority: 29.11.2017 CN 201711223842
(43) Date of publication of application: 07.10.2020
(73) Proprietor: NIO (Anhui) Holding Co., Ltd., Hefei City, Anhui Province (CN)
(72) Inventor: BENGTSSON, Jan, Anting, Jiading, Shanghai (CN); LI, Nan, Anting, Jiading, Shanghai (CN); TIAN, Xiaotao, Anting, Jiading, Shanghai (CN); YUAN, Chunping, Anting, Jiading, Shanghai (CN); DING, Xikun, Anting, Jiading, Shanghai (CN)
(74) Representative: Vossius & Partner Patentanwälte Rechtsanwälte mbB
(86) International application number: PCT/CN2018/075296
(87) International publication number: WO 2019/104871

(56) References cited:
- WO-A1-2017/185698
- CN-A- 102 044 642
- CN-A- 102 945 934
- CN-A- 106 025 141
- CN-A- 106 058 109
- CN-U- 201 511 798
- CN-U- 205 863 258
- DE-A1-102012 202 164
- JP-A- 2004 071 281

## Description

### Technical Field

The invention relates to the field of vehicle structures. More specifically, the invention relates to a battery fixing device for fixing a battery in a position on the bottom of a vehicle. The invention further relates to a vehicle comprising the battery fixing device as described above.

### Background Art

Electric vehicles generally use batteries to provide power. However, technical defects in existing batteries have hindered the broad popularization of electric vehicles, and the most important issue is the range provided per charge. Conventional fuel-operated vehicles are typically filled in a filling station in minutes, while electric vehicles need to take up to several hours to recharge. Due to the range provided per charge of batteries, electric vehicles need to be recharged more frequently, and thus long wait for the battery recharging seriously affects the user experience.

Technical solutions have been proposed to quickly remove a used battery from a vehicle and install a fresh battery. Battery removal and installation can be completed in a few minutes, greatly improving the user experience for electric vehicles. However, existing batteries are fixed to the bottom of the vehicle via bolts or screws, which require the use of an external drive mechanism and is time-consuming. Due to the unreliability of a battery pack fixing mechanism, existing battery pack fixing mechanisms also require additional sensors and electronics to ensure installation accuracy.

WO 2017/185698 A1 discloses a battery fixing device comprising a frame with a cavity, a driver, a carriage provided within the cavity, a connecting rod connecting the carriage and the driver and an elastic component attached at one end to the carriage and at the other end to the frame.

Therefore, there is a continuing need for a new battery fixing device and a vehicle comprising same, and it is desirable that the battery fixing device can solve at least one of the problems described above.

### Summary of the Invention

An object of the invention is to provide a battery fixing device capable of suspending a battery pack at the bottom of a vehicle. Another object of the invention is to provide a vehicle comprising the battery fixing device as described above.

The objects of the invention are achieved by the battery fixing device as defined in the subject-matter of the independent claim 1.

Optional embodiments form the subject-matter of the dependent claims.

A vehicle is disclosed, the bottom of the vehicle being provided with a plurality of battery fixing devices as defined by the subject-matter of the claims 1-8.

The battery fixing device and the vehicle of the invention have the advantages of a simple structure, easy manufacture, convenient installation etc., and can conveniently mount a battery pack or a battery to the bottom of the vehicle to realize the rapid installation and removal of the battery pack.

### Brief Description of the Drawings

The invention will be further described in detail below in conjunction with the accompanying drawings and preferred embodiments. However, those skilled in the art would appreciate that the drawings are drawn merely for the purpose of illustrating the preferred embodiments and therefore should not be taken as limiting the scope of the invention. In addition, unless otherwise specified, the drawings are merely intended to be conceptually illustrative of the constitution or construction of the described objects and may include exaggerated representations, and the drawings are not necessarily drawn to scale.
Fig. 1 is a perspective view of an embodiment of a battery fixing device of the invention.
Fig. 2 is a view of the embodiment shown in Fig. 1 in a first state when in use.
Fig. 3 is a view of the embodiment shown in Fig. 1 in a second state when in use.

### Detailed Description of Embodiments

The preferred embodiments of the invention will be described below in detail with reference to the accompanying drawings. It will be appreciated by those skilled in the art that these descriptions are merely illustrative and exemplary, and should not be construed as limiting the scope of the invention.

First of all, it should be noted that the orientation terms, such as top, bottom, upward and downward, referred to herein are defined with respect to the directions in the drawings, and they are relative concepts and can thus vary depending on their different locations and different practical states. Therefore, these or other orientation terms should not be construed as limiting terms.

In addition, it should also be noted that any single technical feature described or implied in the embodiments herein, or any single technical feature shown or implied in the drawings, or their equivalents can be further combined with one another, so as to obtain other embodiments of the invention which are not directly mentioned herein.

It should be noted that in different drawings, the same reference numerals denote the same or substantially the same components.

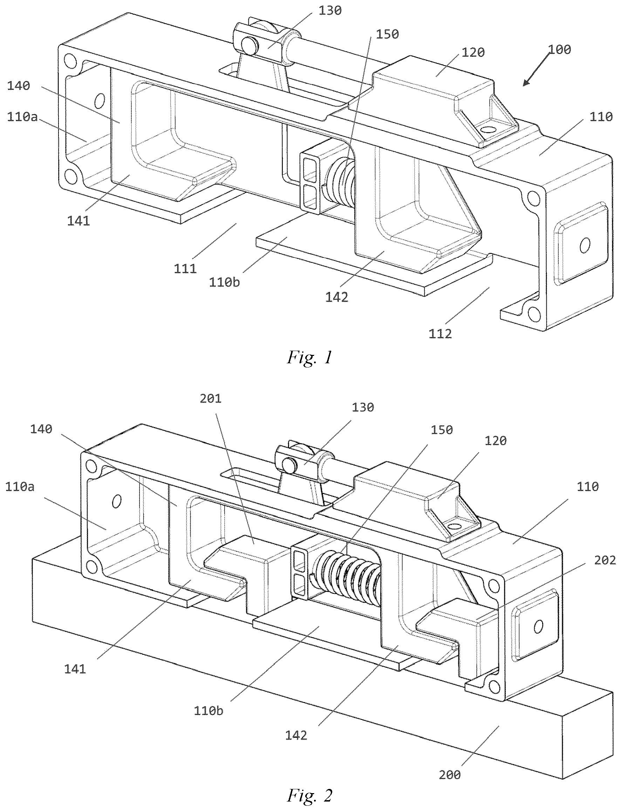

Fig. 1 is a perspective view of an embodiment of a battery fixing device of the invention. The battery fixing device 100 comprises: a frame 110 comprising a cavity 110a and a plurality of openings 111, 112 in a bottom wall 110b of the frame 110; a driver 120 attached to the frame 110; a carriage 140 arranged in the cavity 110a and attached to the driver 120 via a connecting rod 130, wherein the carriage 140 comprises a plurality of snap-fitting portions 141, 142; and an elastic component 150, wherein the elastic component 150 is attached at one end to the carriage 140 and at the other end to the frame 110.

The driver 120 can drive the carriage 140 to move such that the snap-fitting portions 141, 142 and hooks on a battery pack are engaged with each other.

Optionally, the driver 120 is an electromagnetic valve, an electric motor, or another suitable device.

Optionally, the elastic component 150 is a spring or another elastic element.

Optionally, the plurality of snap-fitting portions 141, 142 are respectively arranged near the plurality of the openings 111, 112.

Optionally, the frame 110 is integrally formed, for example, by means of a casting process.

Fig. 2 is a view of the embodiment shown in Fig. 1 in a first state when in use. The battery pack 200 is provided with a plurality of hooks 201, 202. The plurality of hooks 201, 202 are dimensioned so as to enable the hooks to extend into the cavity 110a through the plurality of openings 111, 112 on the frame 110. The driver 120 drives the carriage 140 via the connecting rod 130 so that the plurality of snap-fitting portions 141, 142 of the carriage 140 move toward the openings 111, 112. Therefore, the plurality of snap-fitting portions 141, 142 on the carriage 140 are respectively engaged with the plurality of hooks 201, 202 on the battery pack 200 so that the plurality of hooks 201, 202 on the battery pack 200 are fixed by the plurality of snap-fitting portions 141, 142 on the carriage 140 together with the bottom wall 110b of the frame 110.

Optionally, the plurality of hooks 201, 202 are welded to the battery pack 200 or attached to the battery pack 200 via bolts or screws.

Optionally, the plurality of hooks 201, 202 have a shape opposite to that of the plurality of snap-fitting portions 141, 142 so as to achieve the engagement.

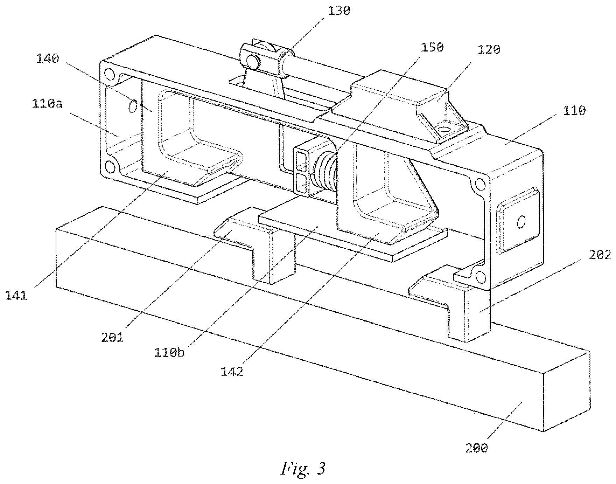

Fig. 3 is a view of the embodiment shown in Fig. 1 in a second state when in use. The driver 120 drives the carriage 140 via the connecting rod 130 so that the plurality of snap-fitting portions 141, 142 of the carriage 140 exit from the openings 111, 112. In this case, the plurality of snap-fitting portions 141, 142 of the carriage 140 are separated from the plurality of hooks 201, 202 on the battery pack 200, so that the battery pack 200 can be removed from the battery fixing device 100. In addition, in this state, it is also possible to insert the plurality of hooks 201, 202 on the battery pack 200 into the plurality of openings 111, 112 on the frame 110, and then the driver 120 drives the carriage 140 via the connecting rod 130 so as to move the plurality of snap-fitting portions 141, 142 of the carriage 140 so same are snap-fitted with the plurality of hooks 201, 202 on the battery pack 200, thereby achieving the first state shown in Fig. 2.

Optionally, the bottom of the vehicle may be provided with a plurality of battery fixing devices, and the battery pack is provided with a corresponding plurality of hooks. The number and location of the battery fixing devices and the hooks may be provided according to actual requirements.

Based on the above disclosure, those skilled in the art would readily apply the battery fixing device of the invention to a vehicle or other transportation means, so as to obtain the vehicle comprising the battery fixing device of the invention.

The invention is disclosed in this description with reference to the accompanying drawings, and those skilled in the art would be able to practice the invention, including manufacturing and using any device or system, selecting suitable materials, and using any combined methods. The scope of the invention is defined by the subject-matter of the appended claims and includes other examples (within this scope) conceivable by those skilled in the art.

## Claims

1. A battery fixing device (100) comprising:
a frame (110) comprising a cavity (110a) and a plurality of openings (111,112) in a bottom wall (110b) of the frame (110);
a driver (120) attached to the frame (110);
a carriage (140) arranged in the cavity (110a) and attached to the driver (120) via a connecting rod (130), wherein the carriage (140) comprises a plurality of snap-fitting portions (141,142), and the driver (120) is capable of driving the carriage (140) to move such that the snap-fitting portions (141,142) and hooks (201,202) on a battery pack (200) are engaged with each other; and
an elastic component (150) attached at one end to the carriage (140) and at the other end to the frame (110);
wherein the hooks (201,202) and the plurality of openings (111,112) are dimensioned so as to enable the plurality of hooks (201,202) to enter the cavity (110a) through the plurality of openings (111,112).

2. The battery fixing device (100) according to claim 1, wherein the battery fixing device (100) has a first state in which the plurality of snap-fitting portions (141,142) on the carriage (140) are engaged with the plurality of hooks (201,202) on the battery pack (200) such that the plurality of hooks (201,202) on the battery pack (200) are fixed by the plurality of snap-fitting portions (141,142) on the carriage (140) together with the bottom wall (110b) of the frame (110).

3. The battery fixing device (100) according to claim 2, wherein the battery fixing device (100) has a second state in which the driver (120) drives the carriage (140) via the connecting rod (130) such that the plurality of snap-fitting portions (141,142) of the carriage (140) exit from the plurality of openings (111,112).

4. The battery fixing device (100) according to claim 3, wherein the battery fixing device (100) is configured to be switched between the first state and the second state.

5. The battery fixing device (100) according to any one of claims 1-4, wherein the driver (120) is an electromagnetic valve.

6. The battery fixing device (100) according to any one of claims 1-4, wherein the elastic component (150) is a spring.

7. The battery fixing device (100) according to any one of claims 1-4, wherein the plurality of hooks (201,202) are welded to the battery pack (200) or attached to the battery pack (200) via bolts or screws.

8. The battery fixing device (100) according to any one of claims 1-4, wherein the plurality of hooks (201,202) have a shape opposite to that of the plurality of the snap-fitting portions (141,142).

9. A vehicle, wherein the bottom of the vehicle is provided with a plurality of battery fixing devices (100) according to any one of claims 1-8.

## Patentansprüche

1. Batteriebefestigungsvorrichtung (100), umfassend:
einen Rahmen (110) mit einem Hohlraum (110a) und einer Vielzahl von Öffnungen (111, 112) in einer Bodenwand (110b) des Rahmens (110);
einen am Rahmen (110) angebrachten Antrieb (120);
einen Schlitten (140), der in dem Hohlraum (110a) angeordnet ist und an dem Antrieb (120) über eine Verbindungsstange (130) angebracht ist, wobei der Schlitten (140) eine Vielzahl von Schnappbefestigungsabschnitten (141, 142) umfasst und der Antrieb (120) in der Lage ist, den Schlitten (140) anzutreiben und so zu verschieben, dass die Schnappbefestigungsabschnitte (141, 142) und Haken (201, 202) an einem Batteriepack (200) miteinander in Eingriff kommen; und
ein elastisches Bauteil (150), das mit einem Ende am Schlitten (140) und mit dem anderen Ende am Rahmen (110) angebunden ist;
wobei die Haken (201, 202) und die Vielzahl von Öffnungen (111, 112) so dimensioniert sind, dass die Vielzahl von Haken (201, 202) durch die Vielzahl von Öffnungen (111, 112) in den Hohlraum (110a) eintreten können.

2. Batteriebefestigungsvorrichtung (100) gemäß Anspruch 1, wobei die Batteriebefestigungsvorrichtung (100) einen ersten Zustand aufweist, in dem die Vielzahl von Schnappbefestigungsabschnitten (141, 142) am Schlitten (140) mit der Vielzahl von Haken (201, 202) am Batteriepack (200) in Eingriff stehen, sodass die Vielzahl von Haken (201, 202) am Batteriepack (200) durch die Vielzahl von Schnappbefestigungsabschnitten (141, 142) am Schlitten (140) zusammen mit der Bodenwand (110b) des Rahmens (110) befestigt sind.

3. Batteriebefestigungsvorrichtung (100) gemäß Anspruch 2, wobei die Batteriebefestigungsvorrichtung (100) einen zweiten Zustand aufweist, in dem der Antrieb (120) den Schlitten (140) über die Verbindungsstange (130) so antreibt, dass die Vielzahl von Schnappbefestigungsabschnitten (141, 142) des Schlittens (140) aus der Vielzahl von Öffnungen (111, 112) austritt.

4. Batteriebefestigungsvorrichtung (100) gemäß Anspruch 3, wobei die Batteriebefestigungsvorrichtung (100) dazu ausgelegt ist, zwischen dem ersten Zustand und dem zweiten Zustand umgeschaltet zu werden.

5. Batteriebefestigungsvorrichtung (100) gemäß einem der Ansprüche 1-4, wobei der Antrieb (120) ein elektromagnetisches Ventil ist.

6. Batteriebefestigungsvorrichtung (100) gemäß einem der Ansprüche 1-4, wobei das elastische Bauelement (150) eine Feder ist.

7. Batteriebefestigungsvorrichtung (100) gemäß einem der Ansprüche 1-4, wobei die Vielzahl von Haken (201, 202) mit dem Batteriepack (200) verschweißt oder über Bolzen oder Schrauben am Batteriepack (200) befestigt sind.

8. Batteriebefestigungsvorrichtung (100) gemäß einem der Ansprüche 1-4, wobei die Vielzahl von Haken (201, 202) eine Form aufweisen, die derjenigen der Vielzahl von Schnappbefestigungsabschnitten (141, 142) entgegengesetzt ist.

9. Fahrzeug, wobei der Boden des Fahrzeugs mit einer Vielzahl von Batteriebefestigungsvorrichtungen (100) gemäß einem der Ansprüche 1-8 versehen ist.

## Revendications

1. Dispositif de fixation de batterie (100) comprenant :
un cadre (110) comprenant une cavité (110a) et une pluralité d'ouvertures (111, 112) dans une paroi inférieure (110b) du cadre (110) ;
un dispositif d'entraînement (120) attaché au cadre (110) ;
un chariot (140) disposé dans la cavité (110a) et attaché au dispositif d'entraînement (120) par le biais d'une tringle de liaison (130), le chariot (140) comprenant une pluralité de parties à accouplement par pression (141, 142), et le dispositif d'entraînement (120) étant apte à entraîner le chariot (140) de façon à ce qu'il se déplace de telle sorte que les parties à accouplement par pression (141, 142) et des crochets (201, 202) sur un bloc-batterie (200) soient mis en prise les uns avec les autres ; et
un composant élastique (150) attaché, à une extrémité, au chariot (140) et, à l'autre extrémité, au cadre (110) ;
les crochets (201, 202) et la pluralité d'ouvertures (111, 112) étant dimensionnés de façon à permettre à la pluralité de crochets (201, 202) d'entrer dans la cavité (110a) par la pluralité d'ouvertures (111, 112).

2. Dispositif de fixation de batterie (100) selon la revendication 1, le dispositif de fixation de batterie (100) ayant un premier état dans lequel la pluralité de parties à accouplement par pression (141, 142) sur le chariot (140) sont mises en prise avec la pluralité de crochets (201, 202) sur le bloc-batterie (200) de telle sorte que la pluralité de crochets (201, 202) sur le bloc-batterie (200) soient fixés par la pluralité de parties à accouplement par pression (141, 142) sur le chariot (140) conjointement avec la paroi inférieure (110b) du cadre (110).

3. Dispositif de fixation de batterie (100) selon la revendication 2, le dispositif de fixation de batterie (100) ayant un second état dans lequel le dispositif d'entraînement (120) entraîne le chariot (140) par le biais de la tringle de liaison (130) de telle sorte que la pluralité de parties à accouplement par pression (141, 142) du chariot (140) sortent de la pluralité d'ouvertures (111, 112).

4. Dispositif de fixation de batterie (100) selon la revendication 3, le dispositif de fixation de batterie (100) étant conçu pour être commuté entre le premier état et le second état.

5. Dispositif de fixation de batterie (100) selon l'une quelconque des revendications 1 à 4, dans lequel le dispositif d'entraînement (120) est une électrovalve.

6. Dispositif de fixation de batterie (100) selon l'une quelconque des revendications 1 à 4, dans lequel l'élément élastique (150) est un ressort.

7. Dispositif de fixation de batterie (100) selon l'une quelconque des revendications 1 à 4, dans lequel la pluralité de crochets (201, 202) sont soudés au bloc-batterie (200) ou attachés au bloc-batterie (200) par le biais de boulons ou de vis.

8. Dispositif de fixation de batterie (100) selon l'une quelconque des revendications 1 à 4, dans lequel la pluralité de crochets (201, 202) présentent une forme inverse à celle de la pluralité de parties à accouplement par pression (141, 142).

9. Véhicule, dans lequel la partie inférieure du véhicule est pourvue d'une pluralité de dispositifs de fixation de batteries (100) selon l'une quelconque des revendications 1 à 8.
